# EUROPEAN PATENT APPLICATION

(11) **EP 1 108 571 A2**
(43) Date of publication of application: **20.06.2001**
(21) Application number: 00126853.1
(22) Date of filing: 07.12.2000
(51) Int. Cl.: B60G 21/05, B60G 9/00

(54) **Torsion beam type suspension**

(30) Priority: 17.12.1999 JP 35968099
(71) Applicant: NISSAN MOTOR COMPANY, LIMITED, Yokohama-shi, Kanagawa 221-0023 (JP)
(72) Inventor: Fujiki, Hiroyuki, Odawara-shi, Kanagawa 250-0001 (JP); Kageyama, Tomohiro, Sagamihara-shi, Kanagawa 228-0821 (JP)
(74) Representative: Weber, Joachim, Dr.

(57) **Abstract**

A torsion beam type suspension is provided which includes a U-shaped stabilizer consisting of a stabilizer main body and a pair of laterally opposite stabilizer arms. The stabilizer main body is disposed in front of and along a torsion beam and rotatably supported on the torsion beam by means of brackets. The arms of the stabilizer are disposed along the inboard sides of the trailing arms and have axial ends connected to lower ends of connecting rods, respectively. The connecting rods are disposed so that the axes thereof extend vertically and connected at upper ends thereof to a vehicle body side member.

## Description

### BACKGROUND OF THE INVENTION

The present invention relates to a torsion beam type suspension for automotive vehicles.

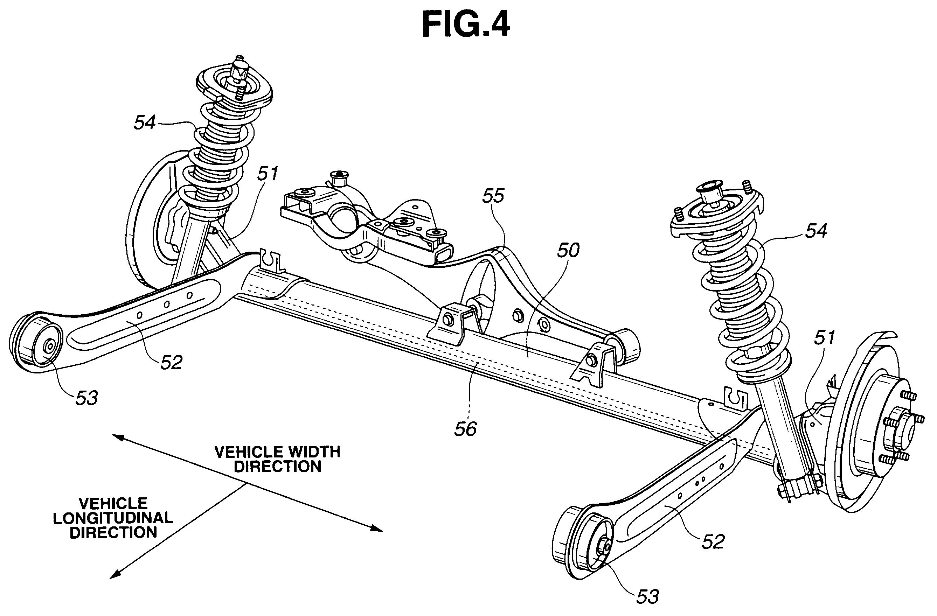

A torsion beam type suspension to which the present invention is directed is shown in Fig. 4. As shown, this type of suspension includes hollow, cylindrical torsion beam 50 extending laterally of a vehicle, and a pair of trailing arms 52 extending longitudinally of the vehicle and connected fixedly at the rear ends thereof to the opposite end portions of torsion beam 50 and pivotally at the front ends thereof to a vehicle body. Axles 51 are fixedly attached to the opposite ends of torsion beam 50, respectively. The suspension further includes shock absorbers 54 and lateral link 55.

For adjustment of the roll rigidity, the suspension is provided with stabilizer 56 made of straight solid bar. Stabilizer 56 is disposed inside torsion beam 56 and fixedly attached at opposite ends thereof to axles 51.

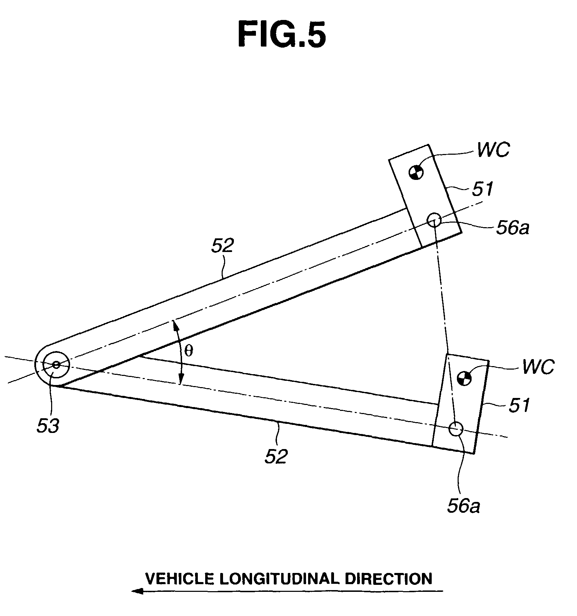

In the above described suspension, trailing arms 52 are adapted to double as arms of stabilizer 56. As shown in Fig. 5, when trailing arms 52 are caused to turn in the opposite directions about bushings 53 provided to the front end portions thereof in response to bound and rebound of laterally opposed wheels, torsion beam 50 and stabilizer 56 are twisted by the amount corresponding to angle θ between trailing arms 52 when observed in plan. In Fig. 5, indicated by WC is a center of the wheel and by 56a is an axial end of stabilizer 56.

When rolling of the vehicle causes the wheels to move up and down in the opposite directions, the opposite ends of torsion beam 50 are caused to turn in the opposite directions about the front end portions of trailing arms 52 while being twisted in the opposite directions. This twisting of torsion beam 50 is transmitted to stabilizer 50 by way of axles 51, thus causing stabilizer 56 to be twisted by the same amount and thereby produce a torsional rigidity corresponding to the twisting thereof.

### SUMMARY OF THE INVENTION

In the above described torsion beam type suspension, stabilizer 56 is twisted in response to twisting of torsion beam 50 such that an angle of torsion of stabilizer 56 is always equal to that of torsion beam 50 and furthermore the length of the arms of stabilizer 56 is restricted by the length of trailing arm 52. In this instance, since the length of trailing arm 52 is determined depending upon other alignments, there is caused a problem that the angle of torsion of stabilizer 56 cannot be adjusted independently as desired.

Further, in the above described suspension wherein trailing arms 52 are connected at the rear ends thereof to torsion beam 50, the length of trailing arm 52 is set relatively long. Thus, the arm length of stabilizer 56 becomes inevitably long and therefore the angle of torsion of stabilizer 56 caused by opposite up and down movements of the wheels is small. For improving the stabilizing efficiency, it is necessary to make larger the diameter of stabilizer 56 for thereby making larger the torsional rigidity. However, as stabilizer 56 is made larger in rigidity in the above described manner, it becomes heavier and therefore the suspension becomes heavier. Furthermore, since a larger stress is caused at the opposite ends of stabilizer 56, it is necessary to make larger the strength of the opposite end attaching portions of stabilizer 56, e.g., by making a joining material layer thicker. Further, since stabilizer 56 restrains the twisting of torsion beam 50, torsion beam 50 becomes more rigid as stabilizer 56 is made larger in the torsional rigidity, thus causing a possibility that the flexibility in twisting (i.e., a quality of being soft to a certain extend in the twisting direction), which torsion beam 50 is required to have, is deteriorated.

Further, the suspension is constructed so that the torsional reaction force of stabilizer 50 is transmitted through trailing arms 52 to bushings 53 provided to the front end portions of trailing arms 52 so as to be sustained by bushings 53. For this reason, it is necessary to construct the torsion beam type suspension such that as the rigidity of stabilizer 56 is set larger for the purpose of retaining a desired stabilizing efficiency bushings 53 are required to be set higher in the rigidity, particularly, in the up and down directions. This will cause restrictions in adjustment of the driving stability, riding comfort, and sound and vibration isolation.

It is accordingly an object of the present invention to provide a torsion beam type suspension which can solve the above noted problems.

It is a further object of the present invention to provide a torsion beam type suspension of the foregoing character which is capable of adjusting the stabilizing efficiency without causing a substantial influence on the torsional rigidity of the torsion beam.

To accomplish the above objects, the present invention provides a torsion beam type suspension comprising a torsion beam extending laterally of a vehicle, a pair of laterally opposed suspension arms fixedly connected to opposite ends of the torsion beam and extending longitudinally of the vehicle to have front end portions pivotally connected by way of bushings to a vehicle body, a U-shaped stabilizer having a stabilizer main body extending laterally of the vehicle and a pair of laterally opposed stabilizer arms extending longitudinally of the vehicle to have axial ends apart from the stabilizer main body, the stabilizer main body being disposed outside of and along the torsion beam and rotatably supported at opposite end portions thereof on the torsion beam, and a pair of connecting rods connecting the axial ends of the stabilizer arms to a vehicle body.

### BRIEF DESCRIPTION OF THE DRAWINGS

Fig. 1 is a perspective view of a torsion beam type suspension according to an embodiment of the present invention;
Fig. 2 is a plan view of the suspension of Fig. 1 in a reduced scale;
Fig. 3 is a diagrammatic side elevation of the suspension of Fig. 1 for illustrating a twisted condition of the suspension;
Fig. 4 is a view similar to Fig. 1 but shows a torsion beam type suspension having a problem to be solved by the invention; and
Fig. 5 is a view similar to Fig. 2 but illustrates a twisted condition of the suspension of Fig. 4.

### DESCRIPTION OF THE PREFERRED EMBODIMENT

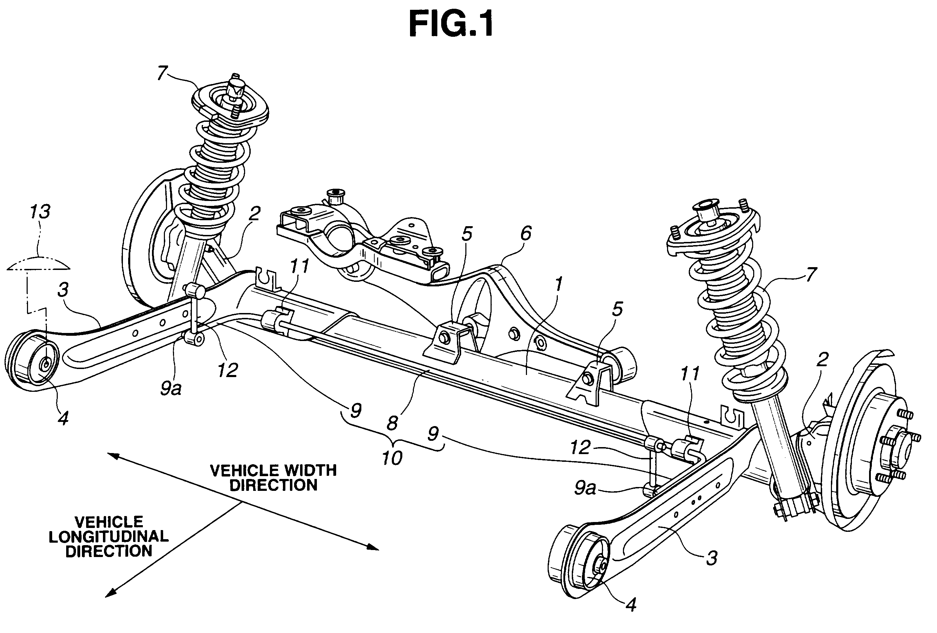

Referring now to Fig. 1, a torsion beam type suspension for use as a vehicle rear suspension includes torsion beam 1 extending laterally of a vehicle (i.e., in the vehicle width direction) and axles 2 fixedly attached to the opposite ends of torsion beam 1, respectively. Though not shown, wheels are rotatably supported on axles 2, respectively. To the opposite end portions of torsion beam 1 are fixedly and rigidly connected rear ends of trailing arms (i.e., suspension arms) 3, respectively. Each trailing arm 3 extends forward from torsion beam 1 to have front ends where they are pivotally connected to a vehicle body 13 by way of bushings 4 so as to be swingable about the front ends upward and downward.

Further, to upper circumferential surface portions of torsion beam 1 are attached upstanding lateral link brackets 5. Lateral link 6 is attached to brackets 5 by way of attaching pins projecting rearward therefrom. By this, in this embodiment, lateral link 6 is disposed rearward of torsion beam 1. In Fig. 1, indicated by 7 is a shock absorber.

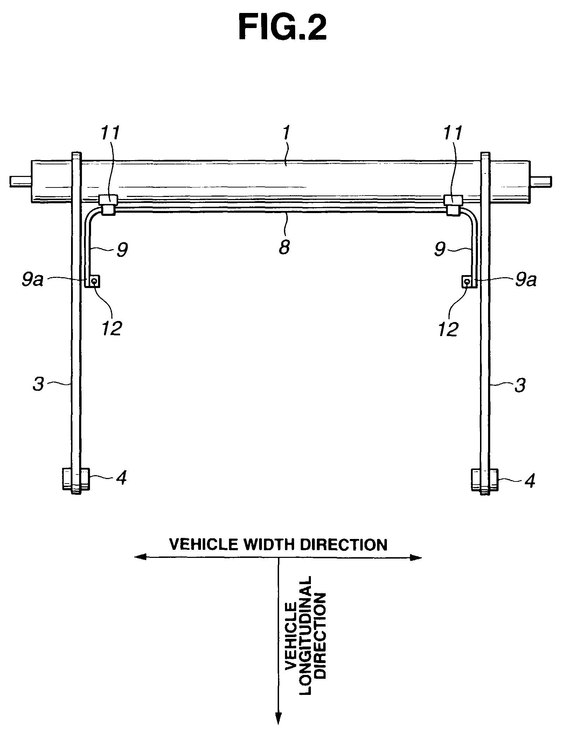

As shown in Figs. 1 and 2, stabilizer 10 is U-shaped and includes stabilizer main body 8 extending in the vehicle width direction 8 (i.e., laterally of a vehicle) and laterally opposite stabilizer arms 9 extending forward from laterally opposite ends of stabilizer main body 8.

Stabilizer main body 8 is disposed on the front side of and along (i.e., in parallel with) torsion beam 1 in such a manner as to leave a predetermined space therebetween. Stabilizer main body 8 is rotatably supported at the opposite end portions thereof on torsion beam 1 by way of respective stabilizer brackets 11. Stabilizer brackets 11 are fixedly attached to a front circumferential surface portion of torsion beam 1. In the meantime, in order to avoid interference between stabilizer 10 and torsion beam 1 assuredly at the time stabilizer main body 8 is twisted, stabilizer main body 8 may be bent into an arcuated shape in a way as to protrude a little forward.

Further, arms 9 of stabilizer 10 are disposed along the inboard sides of trailing arms 3 and have front axial ends to which lower ends of connecting rods 12 are pivotally connected. Connecting rods 12 are disposed in such a manner as to allow the axes thereof to be oriented or directed vertically and have upper ends pivotally connected to a vehicle body 13. Connecting rods 12 are therefore swingable forward and rearward about the upper ends thereof.

The operation of the torsion beam type suspension structured as above will be described.

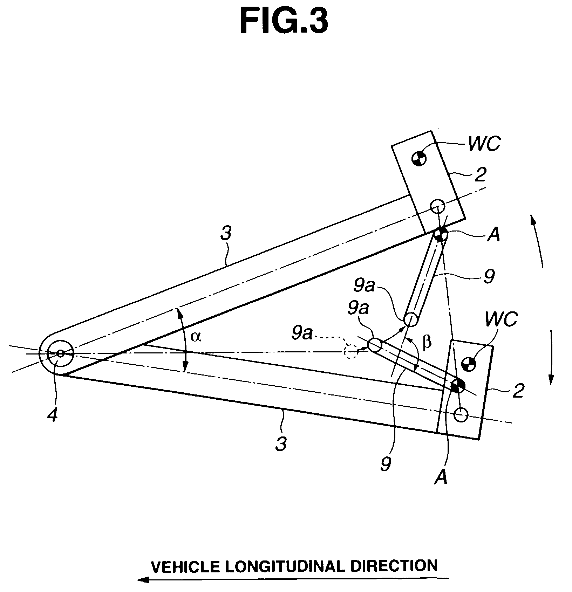

When the wheels are caused to move up and down in the opposite directions in response to rolling of the vehicle which is caused at the time of, for example, cornering, torsion beam 1 is inclined in the longitudinal direction thereof (i.e., laterally of the vehicle) in response to up and down movements of the wheels. In this instance, the end portions of torsion beam 1 are caused to swing about the respective front end portions of trailing arms 3 in the opposite directions, thus causing torsion beam 1 to be twisted. As diagrammatically shown in Fig. 3 which is a view taken from one of laterally opposite sides of the vehicle, an angle of torsion corresponding to angle α between trailing arms 3 is caused in torsion beam 1.

Further, inclination of torsion beam 1 in the longitudinal direction thereof (i.e., in the lateral direction of the vehicle) causes stabilizer main body 8 supported on torsion beam 1 to incline by the same angle, thus causing the points A at which stabilizer main body 8 is supported upon torsion beam 1 to be offset as shown in Fig. 3. On the other hand, axial ends 9a of stabilizer arms 9 extending continuously from the opposite end portions of stabilizer main body 8 are connected to vehicle body 13 by way of connecting rods 12 and therefore are located at nearly the same height or level when observed from one of laterally opposite sides of the vehicle. However, by the above described inclination of stabilizer main body 8 in response to up and down movements of the wheels, the lower end portions of connecting rods 12 and therefore axial ends 9a of stabilizer arms 9 are caused to turn and therefore displaced from each other in the vehicle longitudinal direction (i.e., toward torsion beam 1). In Fig. 3, since the bound side is displaced largely upward, axial end 9a on the bound side is shown as being displaced largely toward torsion beam 1.

Since stabilizer arm 9 is far shorter than trailing arm 3, angle β between stabilizer arms 9 when viewed in Fig. 3 becomes so large though torsion beam 1 and stabilizer 10 incline by the same amount, thus causing stabilizer 10 to be twisted more than torsion beam 1.

As a result, a larger roll rigidity can be attained as compared with that attained by the suspension of Fig. 4 wherein stabilizer 56 is disposed within torsion beam 50, even if stabilizer main bodies 8 and 56 have the same torsional rigidity. Further, for attaining the same roll rigidity, stabilizer main body 8 can be smaller in diameter since it causes a larger angle of torsion, thus enabling stabilizer 10 and therefore the suspension to be lighter in weight. In other words, a desired stabilizing efficiency can be attained through adjustment of the length of stabilizer arm 9, without changing the diameter of stabilizer arm 9.

Further, in this embodiment, stabilizer 10 is supported by torsion beam 1 in such a manner as to be rotatable about the axis thereof, and stabilizer 10 and torsion beam 1 can be twisted to produce torsion independently. Accordingly, it is not necessary to transmit torsion of torsion beam 1 to stabilizer 10, which is otherwise necessitated in the suspension of Fig. 4, so that torsional reaction of stabilizer 10 is not transmitted to torsion beam 1 and therefore the torsional rigidity of torsion beam 1 can be made smaller even if the torsional rigidity of stabilizer 10 is set larger. Thus, it becomes possible to set the roll rigidity larger while retaining a required flexibility of torsion beam 1.

Further, this prevents the required strength of stabilizer brackets 11 from becoming so high even if the rigidity of stabilizer 10 is set high since stabilizer 10 is not fixedly connected to torsion beam 1, namely, torsional torque of stabilizer 10 is not supplied to stabilizer bracket 11. As a result, even if the torsional rigidity of stabilizer 10 is set larger, it is not necessary to make higher the strength of stabilizer brackets 11 and torsion beam 1 having attached thereto stabilizer brackets 11, thus making it possible to prevent increase in weight of the suspension.

Further, since the torsional reaction from stabilizer 10 is not transmitted to torsion beam 1 and further to trailing arms 3, only the torsional reaction of torsion beam 1 itself is supplied to bushings 4 at the front end portions of trailing arms 3. Thus, it is not necessary to sustain the torsional reaction of stabilizer 10 by bushings 4. By this, it becomes possible to make smaller the rigidity of bushings 4, particularly, the rigidity of resisting change in form in the vertical direction. As a result, adjustment of characteristics of bushings from the point of view of driving stability (compliance steer), riding comfort (harshness) and noise and vibration isolation property can be attained with ease, and therefore driving stability (compliance steer), riding comfort (harshness) and noise and vibration isolation property can be improved.

While in the above described embodiment stabilizer main body 8 has been described and shown as being disposed in front of torsion beam 1, stabilizer main body 8 may be disposed in the rear of torsion beam 1. In this instance, arms 9 of stabilizer 10 are disposed so as to extend rearward of the vehicle, and lateral link 6 is disposed in the front of torsion beam 1. However, as compared with the above described embodiment, this modification requires an additional space for allowing up and down swinging of stabilizer arms 9 and therefore a larger space for disposition of stabilizer 10. In this connection, in the above described embodiment, stabilizer arms 9 are disposed along trailing arms 3 of stabilizer 10 so that it is not necessary to secure an independent space for allowing up and down swinging of stabilizer arms 9, thus making it possible to make smaller the space for disposition of stabilizer 10.

Further, stabilizer 10 may be disposed under or above torsion beam 1. In this instance, stabilizer arms 9 may be disposed so as to extend either forward or rearward of the vehicle.

Further, the torsion beam type suspension may be structured such that torsion beam 1 and trailing arms 3 are connected in a way as to allow the suspension to have an H-shaped configuration in plane.

The entire contents of Japanese Patent Application )11-359680 (filed December 17, 1999) are incorporated herein by reference.

Although the invention has been described above by reference to an embodiment of the invention, the invention is not limited to the embodiment described above. Modifications and variations of the embodiment described above will occur to those skilled in the art, in light of the above teachings. The scope of the invention is defined with reference to the following claims.

## Claims

1. A torsion beam type suspension comprising:
a torsion beam extending laterally of a vehicle;
a pair of laterally opposed suspension arms fixedly connected to opposite ends of said torsion beam and extending longitudinally of the vehicle to have front end portions pivotally connected by way of bushings to a vehicle body;
a U-shaped stabilizer having a stabilizer main body extending laterally of the vehicle and a pair of laterally opposite stabilizer arms extending longitudinally of the vehicle to have axial ends apart from the stabilizer main body;
said stabilizer main body being disposed outside of and along said torsion beam and rotatably supported at opposite end portions thereof on said torsion beam; and
a pair of connecting rods connecting the axial ends of said stabilizer arms to a vehicle body.

2. A torsion beam type suspension according to claim 1, wherein said suspension arms comprise trailing arms connected at rear ends thereof to said torsion beam and extending longitudinally of the vehicle to have said front end portions, said stabilizer main body being disposed on the front side of said torsion beam and said stabilizer arms being disposed along inboard sides of said trailing arms, respectively.

3. A torsion beam type suspension according to claim 2, wherein the length of said stabilizer arms in the longitudinal direction of the vehicle is smaller than the distance between each of said bushings and said torsion beam.

4. A torsion beam type suspension according to claim 2, wherein said stabilizer main body is formed into an arcuated shape so as to protrude a little forward of the vehicle.

5. A torsion beam type suspension according to claim 1, wherein said connecting rods are disposed so as to have vertical axes and pivotally connected at upper ends thereof to the vehicle body and at lower ends thereof to the axial ends of said stabilizer arms so as to be swingable forward and rearward about the upper ends, respectively.

6. A torsion beam type suspension according to claim 1, wherein said torsion beam is hollow, cylindrical.

7. A torsion beam type suspension according to claim 1, further comprising a pair of axles connected to opposite lateral ends of said torsion beam, respectively.

8. A torsion beam type suspension according to claim 6, further comprising a lateral link disposed rearward of said torsion beam and connecting between said torsion beam and the vehicle body.

9. In a vehicle rear suspension having a torsion beam extending laterally of a vehicle, a pair of laterally opposed trailing arms connected to the torsion beam to constitute a generally U-shaped configuration, and a stabilizer, the improvement wherein said stabilizer is U-shaped and has a stabilizer main body and a pair of parallel stabilizer arms, said stabilizer main body being disposed outside of and in parallel with the torsion beam and rotatably supported on the torsion beam, said stabilizer arms being disposed along inboard sides of the trailing arms and having axial ends connected by way of connecting rods to a vehicle body.

10. A vehicle rear suspension according to claim 9, wherein said stabilizer arms are shorter than the trailing arms.

11. A vehicle rear suspension according to claim 9, wherein said connecting rods are pivotally connected to the vehicle body so as to be swingable forward and rearward of the vehicle, the axial ends of said stabilizer arms being pivotally connected to the connecting rods.
